# EUROPÄISCHE PATENTSCHRIFT

(11) **EP 1 279 767 B1**
(45) Veröffentlichungstag und Bekanntmachung des Hinweises auf die Patenterteilung: **25.06.2008**
(21) Anmeldenummer: 02010353.7
(22) Anmeldetag: 07.05.2002
(51) Int. Cl.: D21G 1/02

(54) **Durchbiegungseinstellwalze**
Deflection controlled roll
Rouleau à réglage de la flexion

(30) Priorität: 25.07.2001 DE 10136271
(43) Veröffentlichungstag der Anmeldung: 29.01.2003
(73) Patentinhaber: Voith Patent GmbH, 89522 Heidenheim (DE)
(72) Erfinder: van Haag, Rolf, Dr., 47647 Kerken (DE)
(74) Vertreter: Manitz, Finsterwald & Partner GbR

(56) Entgegenhaltungen:
- EP-B- 0 328 503
- DE-A- 2 230 139
- DE-C- 3 835 152
- DE-C- 19 600 078

## Beschreibung

Die Erfindung betrifft eine Durchbiegungseinstellwalze mit einem umlaufenden Walzenmantel, einem den Walzenmantel axial durchsetzenden drehfesten Joch und mehreren in Richtung der Walzenachse hintereinander am Joch angeordneten hydrostatischen Stützelementen, die jeweils durch eine druckfluidbetätigte Zylinder/Kolben-Einheit gebildet sind und auf die Innenseite des Walzenmantels eine Stützkraft ausüben, wobei die Kolbenfläche eines jeweiligen hydrostatischen Stützelements kleiner ist als die zum Walzenmantel weisende Hydrostatiktaschenfläche und die Hydrostatiktaschen der hydrostatischen Stützelemente jeweils über wenigstens eine Drossel oder Kapillare mit Druckfluid versorgt werden. Die Hydrostatiktaschen können insbesondere über den Druckraum des jeweiligen Stützelements versorgt sein, was bedeutet, dass die Drosseln bzw. Kapillaren zwischen diesem Druckraum und den betreffenden Hydrostatiktaschen vorgesehen sind. Eine derartige Walze ist beispielsweise in der DE 2 230 139 A und der EP-B-0 328 503 beschrieben.

In Durchbiegungseinstell- oder Durchbiegungsausgleichswalzen kommen Stützquellen oder Stützelemente zum Einsatz, die durch eine Versorgungsleitung mit Öldruck beaufschlagt werden. Durch diesen Öldruck wird die jeweilige Stützquelle gegen den rotierenden Walzenmantel gepreßt. Da die Kolbenfläche der Stützquelle kleiner ist als die zum Walzenmantel weisende Hydrostatiktaschenfläche, stellt sich ein geringerer Taschenöldruck ein. Die Druckdifferenz zwischen Kolbendruck und Taschendruck bestimmt den Volumenstrom, der über die zwischen die Taschenfläche und die Kolbenfläche geschalteten Kapillaren fließt. Somit stellt sich der jeweilige Volumenstrom an einer Stützquelle in Abhängigkeit vom Kolbendruck ein.

Zur individuellen Profilkorrektur, d.h. insbesondere zur Korrektur bestimmter Eigenschaftsquerprofile, der durch den Walzenspalt laufenden Warenbahn, insbesondere Papier- oder Kartonbahn, werden die Stützquellen einzeln mit einem Öldruck beaufschlagt. Die Höhe der Öldrücke wird über eine online-Profildickenmessung der Warenbahn geregelt.

In Abhängigkeit von den jeweils erforderlichen Profilkorrekturen kann es zu großen Differenzen zwischen den Öldrücken der verschiedenen Stützquellen kommen (z.B. von 3,5 bis 90 bar von Stützquelle zu Stützquelle). Dies führt, wie bereits angedeutet, zu Volumenstromdifferenzen an den Stützquellen. Zwischen dem rotierenden Walzenmantel und den Stützquellen entsteht durch die Ölscherung in Abhängigkeit von der Mantelgeschwindigkeit und der Ölspalthöhe, die wieder vom Volumenstrom, der Öltemperatur und dem Taschendruck abhängig ist, Reibung. Infolge der großen Druckunterschiede ergibt sich somit von einer Stützquelle zur anderen eine unterschiedlich hohe Reibleistung, die sich in Temperaturdifferenzen am Walzenmantel auswirkt. Diese Temperaturdifferenzen wirken sich wieder auf die Form des Walzenmantels aus und bringen somit einen das erzeugte Streckenlastprofil der Durchbiegungseinstellwalze beeinflussende Rückkopplungseffekt mit sich.

Da sich bei einer Druckentlastung an einer Stützquelle ein geringerer Volumenstrom einstellt, ergibt sich an dieser Stützquelle trotz einer betragsmäßig geringeren Reibleistung als bei höheren Drücken eine höhere Temperatur. Eine höhere Temperatur führt nun aber zu einer Ausdehnung des Walzenmantels, die sich in einer Streckenlasterhöhung im Walzenspalt auswirkt. Die Temperaturentwicklung wirkt sich also gegenläufig zur gewünschten Druckentlastung aus und ist somit unerwünscht. In Einzelfällen kann dies sogar zu einer Instabilität im Regelverhalten führen.

Üblicherweise wird die Temperaturentwicklung an den Stützquellen durch einen separaten Kühlölström begrenzt, der in den Innenraum der Walze geleitet wird. Hierzu wird ein Volumenstrom geringer Temperatur, dessen Menge über die Rücklauftemperatur der Walze geregelt wird, über Düsen im Walzeninnenraum verteilt. Bisher wird mit einer solchen Verteilung jeder Stützquelle die gleiche Menge Kühlöl zugeführt. Infolge der zuvor genannten Volumenstromdifferenzen stellen sich nun aber trotz der zugeführten Kühlölmenge unterschiedliche Temperaturen an den Stützquellen ein. Dieser Sachverhalt wird durch das folgende Berechnungsbeispiel belegt:

Bei dem vorliegenden Berechnungsbeispiel handelt es sich um eine Biegeausgleichswalze eines Glättwerks, wobei die Produktionsgeschwindigkeit 1540 m/min beträgt. Die Oberflächentemperatur der Walze ist in diesem Fall gleich der Rücklauftemperatur, so daß kein Wärmestrom durch den Mantel fließt.

Die für die Berechnung relevanten technischen Daten sind wie folgt:

| | |
|---|---|
| Außendurchmesser | 1016 mm |
| Innendurchmesser | 780 mm |
| Stützquellengröße | 70 mm Kolbendurchmesser |
| Ölviskosität | ISO VG 68 (Mineralöl) |
| Zulauftemperatur | 40°C für alle Ströme (Stützquelle und Kühlöl) |

In der Berechnung wurden die Temperaturentwicklung und die Reibleistung einer Stützquelle für einen minimal (3,5 bar) und maximal (90 bar) möglichen Kolbendruck in Abhängigkeit vom Kühlstrom untersucht.

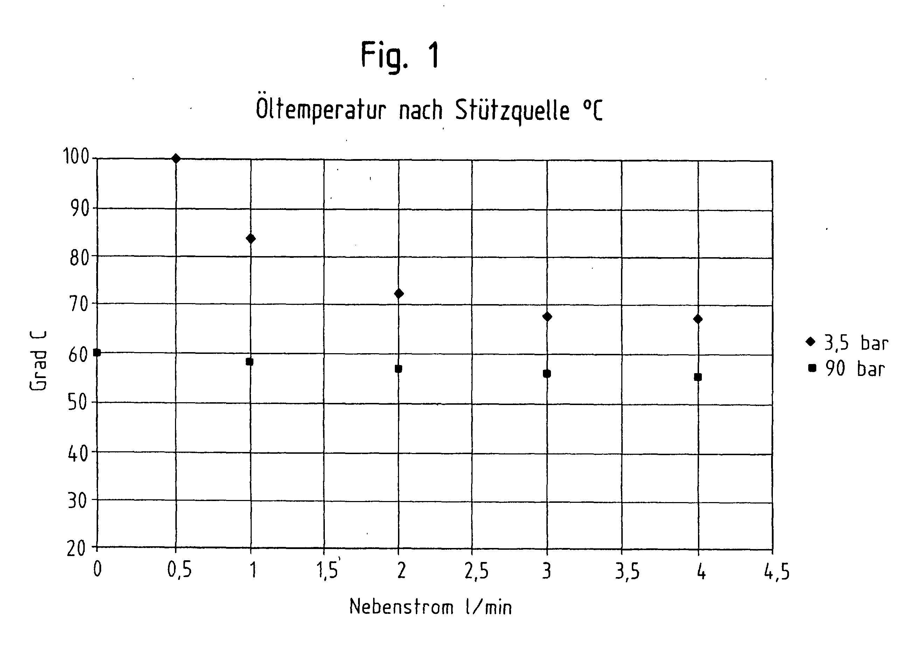

Figur 1 zeigt ein Diagramm, in dem für den minimalen und den maximalen Kolbendruck 3,5 bar bzw. 90 bar jeweils die sich nach einer Stützquelle ergebende Öltemperatur über dem Nebenstrom, d.h. Kühlstrom, dargestellt ist. Dabei ist die Temperatur in °C und der Nebenstrom in l/min angegeben. Die dargestellte Öltemperatur wurde unmittelbar im Auslauf in Manteldrehrichtung hinter der Stützquelle ermittelt.

Im Einlauf der Stützquelle wird Öl mit einer Mischtemperatur, die sich durch das Zuspritzen des Kühlöls im Walzeninneren ergibt, mit dem Walzenmantel mitlaufend unter die Stützquelle eingezogen.

Anhand der Figur 1 ist zu erkennen, daß die Öltemperaturen bei einem Kolbendruck von 3,5 bar für alle untersuchten Kühlölströme deutlich höher liegen als bei einem Kolbendruck von 90 bar.

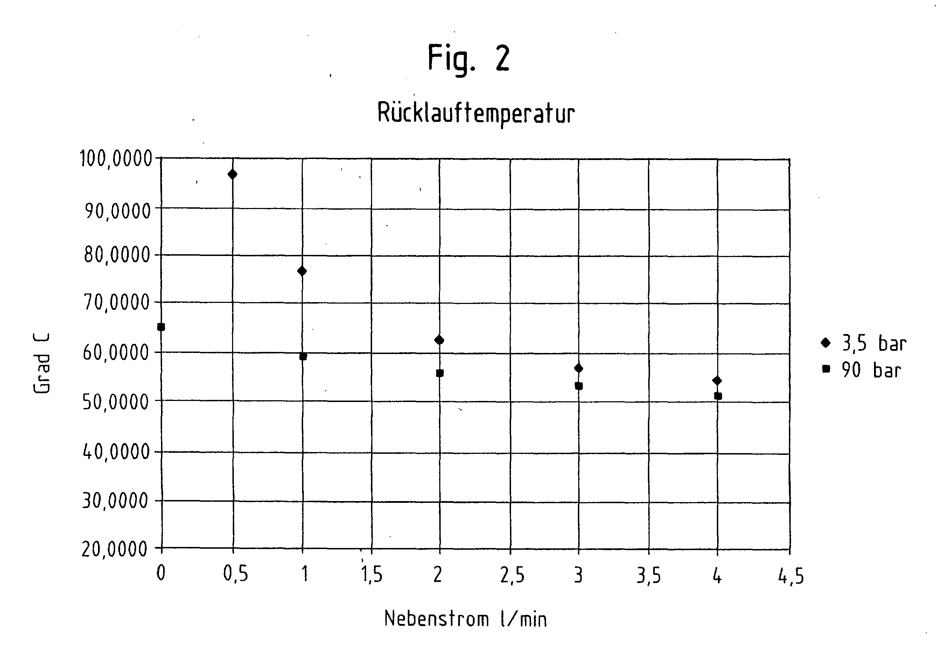

Die sich einstellende Mischtemperatur im Walzeninneren entspricht in etwa der örtlichen Rücklauftemperatur. Figur 2 zeigt ein Diagramm, in dem für die beiden verschiedenen Kolbendrücke jeweils die berechnete Rücklauftemperatur über dem Kühlstrom (Nebenstrom) aufgetragen ist. Hierbei ist zu beachten, daß in der Berechnung jeweils nur eine Stützquelle untersucht wurde, d.h. eine Vermischung des Öls aus mehreren Stützquellen mit unterschiedlichen Öldrücken und damit unterschiedlichen Temperaturen unberücksichtigt bleibt.

Die sich einstellenden örtlichen Rücklauftemperaturen zeigen mit kleiner werdenden Kühlölströmen eine steigende Temperaturdifferenz zwischen einer hoch belasteten und einer niedrig belasteten Stützquelle. Eine solche Temperaturdifferenz wirkt sich nun aber maßgeblich auf die Form des rotierenden Walzenmantels aus.

Eine aus der DE 196 00 078 C bekannte Durchbiegungseinstellwalze umfasst einen umlaufenden Walzenmantel, ein den Walzenmantel axial durchsetzendes drehfestes Joch sowie mehrere in Richtung der Walzenachse hintereinander am Joch angeordnete hydrostatische Stützelemente, die jeweils durch eine druckfluidbetätigte Zylinder-/Kolben-Einheit gebildet sind und auf die Innenseite des Walzenmantels eine Stützkraft ausüben. Die Kolbenfläche eines jeweiligen hydrostatischen Stützelements ist größer als die zum Walzenmantel weisende Hydrostatiktaschenfläche. Die Hydrostatiktaschen der hydrodynamischen Stützelemente werden jeweils über einen Kanal mit Druckfluid versorgt, in dem ein Druckdifferenzventil angeordnet ist.

Bei einer aus der DE 38 35 152 C bekannten Durchbiegungseinstellwalze wird den Hydrostatiktaschen Druckfluid über den Druckraum des betreffenden Stützelements und zusätzlich Druckfluid unter Umgehung des Druckraums zugeführt. Das zusätzliche Druckfluid wird mit vorgebbarer Temperatur über einen Mengenregler zugeführt.

Ziel der Erfindung ist es, eine verbesserte Durchbiegungseinstellwalze der eingangs genannten Art zu schaffen, bei der die zuvor genannten Probleme beseitigt sind.

Diese Aufgabe wird nach der Erfindung dadurch gelöst, daß der Volumenstrom zumindest eines Teils des einer jeweiligen Hydrostatiktasche zugeführten Druckfluids über wenigstens eine zwischen den Druckraum des betreffenden Stützelements und die zugeordnete Hydrostatiktasche geschaltete variable Drossel in Abhängigkeit vom Kolbendruck des jeweiligen Stützelements variierbar ist, wobei die variable Drossel mit zunehmend kleiner werdenden Kolbendrücken zunehmend geöffnet wird und umgekehrt. Dabei ist der Volumenstrom vorzugsweise so variierbar, daß sich eine zumindest im wesentlichen konstante Mischtemperatur im Walzeninnern ergibt.

Die variable Drossel kann insbesondere ein Ventil umfassen bzw. durch ein Ventil gebildet sein.

Bei einer bevorzugten praktischen Ausführungsform ist die variable Drossel so ausgeführt, daß der betreffende Volumenstrom mit zunehmend kleiner werdenden Kolbendrücken zunehmend größer wird und umgekehrt. Durch eine entsprechende Ansteuerung der variablen Drosseln kann somit die Mischtemperatur im Walzeninnern zumindest im wesentlichen konstant gehalten werden.

Vorteilhafterweise ist jedes Stützelement jeweils mit wenigstens einer variablen Drossel versehen.

Zur Erhöhung der Betriebssicherheit kann eine jeweilige Hydrostatiktasche sowohl über wenigstens eine Festdrossel oder nichtvariable Kapillare als auch über wenigstens eine variable Drossel mit Druckfluid versorgt werden.

Zur konstanten Versorgung einer jeweiligen Hydrostatiktasche kann somit die übliche Festdrossel oder Kapillare dienen. Diese kann insbesondere so ausgelegt sein, dass die Hydrostatiktasche auch bei geschlossenem internem Ventil (variable Drossel) bei allen Drücken betriebssicher funktioniert.

Die variable Drossel wird vorzugsweise durch den Kolbendruck gesteuert.

Bei einer zweckmäßigen praktischen Ausführungsform der erfindungsgemäßen Durchbiegungseinstellwalze ist die variable Drossel so ausgeführt und/oder ansteuerbar, dass sie bei Kolbendrücken oberhalb eines vorgebbaren oberen Grenzwertes zumindest im wesentlichen ganz geschlossen und/oder bei Kolbendrücken unterhalb einem vorgebbaren unteren Grenzwert zumindest im wesentlichen ganz geöffnet ist.

Die variable Drossel kann insbesondere durch einen vom Kolbendruck beaufschlagten Steuerkolben gesteuert sein, der vorzugsweise im jeweiligen Stützelement geführt ist. Dabei ist der Steuerkolben vorzugsweise federbelastet und durch den Kolbendruck im Druckraum des Stützelements entgegen der Federkraft beaufschlagbar.

Von Vorteil ist auch, wenn mit der variablen Drossel eine Festdrossel in Reihe geschaltet ist. Durch eine solche in Reihe geschaltete Fest- oder Konstantdrossel kann die variable Drosselwirkung des Ventils, die vorzugsweise über den Öffnungsweg eines Steuerkolbens erfolgt, fein abgestimmt werden.

Zur Verbesserung des Schwingungsverhaltens der betreffenden Einheit kann zwischen der variablen Drossel und dem Druckraum des jeweiligen Stützelements eine Vordrossel vorgesehen sein.

Die Erfindung wird im folgenden anhand von Ausführungsbeispielen unter Bezugnahme auf die Zeichnung näher erläutert; in dieser zeigen:
- Figur 1: ein Diagramm, in dem für zwei verschiedene Kolbendrücke jeweils die sich nach einer Stützquelle ergebende Öltemperatur über dem Kühlölstrom (Nebenstrom) dargestellt ist,
- Figur 2: ein Diagram, in dem für zwei verschiedene Kolbendrükke jeweils die berechnete Rücklauftemperatur über dem Kühlölstrom (Nebenstrom) dargestellt ist,
- Figur 3: eine schematische geschnittene Teildarstellung einer Ausführungsform einer erfindungsgemäßen Durchbiegungseinstellwalze, bei der die variablen Drosseln jeweils mit einer Festdrossel in Reihe geschaltet sind,
- Figur 4: eine schematische Draufsicht des in der Figur 3 gezeigten Stützelements,
- Figur 5: eine schematische geschnittene Teildarstellung einer weiteren Ausführungsform einer erfindungsgemäßen Durchbiegungseinstellwalze mit in Reihe geschalteten variablen und Festdrosseln,
- Figur 6: eine schematische Draufsicht des in der Figur 5 gezeigten Stützelements,
- Figur 7: eine schematische geschnittene Teildarstellung einer weiteren Ausführungsform einer erfindungsgemäßen Durchbiegungseinstellwalze, bei der eine jeweilige Hydrostatiktasche sowohl über eine Festdrossel als auch über eine parallele variable Drossel versorgt wird,
- Figur 8: eine schematische Draufsicht des in der Figur 7 gezeigten Stützelements,
- Figur 9: eine schematische geschnittene Teildarstellung einer weiteren Ausführungsform einer erfindungsgemäßen Durchbiegungseinstellwalze, bei der eine jeweilige Hydrostatiktasche sowohl über eine Festdrossel als auch über eine parallele variable Drossel versorgt wird, und
- Figur 10: eine schematische Draufsicht des in der Figur 9 gezeigten Stützelements.

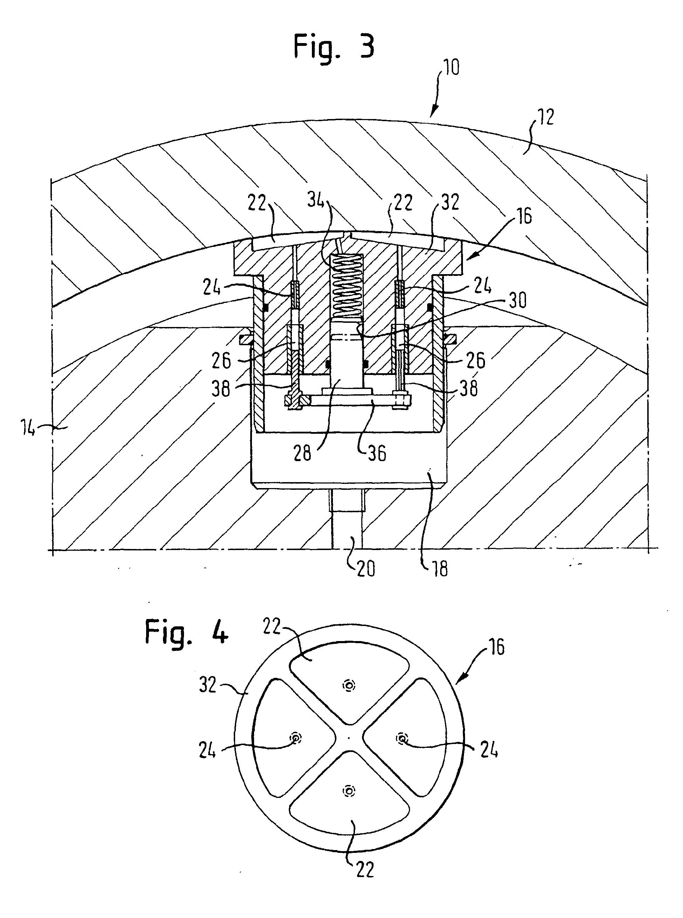

Figur 3 zeigt in schematischer geschnittener Teildarstellung eine beispielhafte Ausführungsform einer erfindungsgemäßen Durchbiegungseinstellwalze 10, die zur Behandlung einer Materialbahn wie insbesondere einer Papier- oder Kartonbahn in einem mit einer Gegenfläche gebildeten Spalt (nicht gezeigt) dienen kann.

Die Durchbiegungseinstellwalze 10 umfaßt einen umlaufenden Walzenmantel 12, ein den Walzenmantel 12 axial durchsetzendes drehfestes Joch 14 und mehrere in Richtung der Walzenachse hintereinander am Joch 14 angeordnete hydrostatische Stützelemente 16, von denen in der-Figur 3 lediglich eines zu erkennen ist.

Die Stützelemente 16 sind jeweils durch eine druckfluidbetätigte Zylinder/Kolben-Einheit gebildet, die auf die Innenseite des Walzenmantels 12 eine jeweilige Stützkraft auszuübt.

Die Stützelemente 16 können einzeln und/oder gruppenweise ansteuerbar sein, wodurch sich entsprechende, in Richtung der Walzenachse aufeinanderfolgende Walzenzonen ergeben.

Der Druckraum 18 eines jeweiligen Stützelements 16 ist über einen im Joch 14 vorgesehenen Kanal 20 mit Druckfluid beaufschlagbar. Die mantelseitigen Hydrostatiktaschen 22 werden jeweils über wenigstens eine Drossel oder Kapillare 24 mit Druckfluid versorgt. Dabei sind diese Drosseln 24 im vorliegenden Fall zwischen die Hydrostatiktaschen 22 und den Druckraum 18 geschaltet.

Im vorliegenden Fall besitzt ein jeweiliges Stützelement 16 beispielsweise jeweils vier Hydrostatiktaschen 22.

Der Volumenstrom des einer jeweiligen Hydrostatiktasche 22 zugeführten Druckfluids ist erfindungsgemäß in Abhängigkeit vom in dem Druckraum 18 des Stützelements 16 vorherrschenden Kolbendruck variierbar. Dabei sind bei den verschiedenen Stützelementen 16 die betreffenden Volumenströme insbesondere so variierbar, daß sich eine zumindest im wesentlichen konstante Mischtemperatur im Walzeninnern ergibt.

Dazu wird der jeweilige Volumenstrom über eine jeweilige variable Drossel 26 in Abhängigkeit vom Kolbendruck variiert. Wie anhand der Figur 3 zu erkennen ist, sind die variablen Drosseln 26 zwischen den Druckraum 18 und die jeweils zugeordnete Hydrostatiktasche 22 geschaltet.

Die variablen Drosseln 26 können jeweils ein Ventil umfassen oder als Ventil ausgeführt sein. Im vorliegenden Fall sind diese Ventile so ausgeführt, daß der betreffende Volumenstrom mit zunehmend kleiner werdenden Kolbendrücken zunehmend größer wird und umgekehrt.

Im vorliegenden Fall mündet in jede Hydrostatiktasche 22 jeweils eine Festdrossel 24, d.h. nicht variable Kapillare, die jeweils mit einer in den Druckraum 18 des Stützelements 16 mündenden variablen Drossel 26 in Reihe geschaltet ist.

Die variablen Drosseln 26 sind durch den Kolbendruck im Druckraum 18 gesteuert. Dabei können die variablen Drosseln 26 beispielsweise so ausgeführt und/oder ansteuerbar sein, daß sie bei Kolbendrücken oberhalb eines vorgebbaren oberen Grenzwertes zumindest im wesentlichen ganz geschlossen und/oder bei Kolbendrücken unterhalb einem vorgebbaren unteren Grenzwert zumindest im wesentlichen ganz geöffnet sind.

Im vorliegenden Fall sind die variablen Drosseln 26 durch einen vom Kolbendruck beaufschlagten Steuerkolben 28 gesteuert, der in einer Ausnehmung 30 des Kolbens 32 des Stützelements 16 geführt ist. Der Steuerkolben 28 ist durch eine am Boden der Ausnehmung 30 abgestützte Feder 34 in Richtung des Druckraums 18 belastet und über eine zugeordnete Platte 36 durch den Kolbendruck im Druckraum 18 entgegen der Kraft der Feder 34 beaufschlagbar. Mit der Platte 36 sind Ventilkörper 38 verbunden, die entsprechend der jeweiligen Druckbeaufschlagung des Steuerkolbens 28 in Schließrichtung oder in Öffnungsrichtung der ventilartigen variablen Drosseln 26 bewegt werden.

Figur 4 zeigt eine schematische Draufsicht des in der Figur 3 zu erkennenden Stützelements 16. Wie insbesondere anhand dieser Figur 4 zu erkennen ist, umfaßt das Stützelement 16 im vorliegenden Fall vier Hydrostatiktaschen 22, in die jeweils eine Drossel 24 mündet.

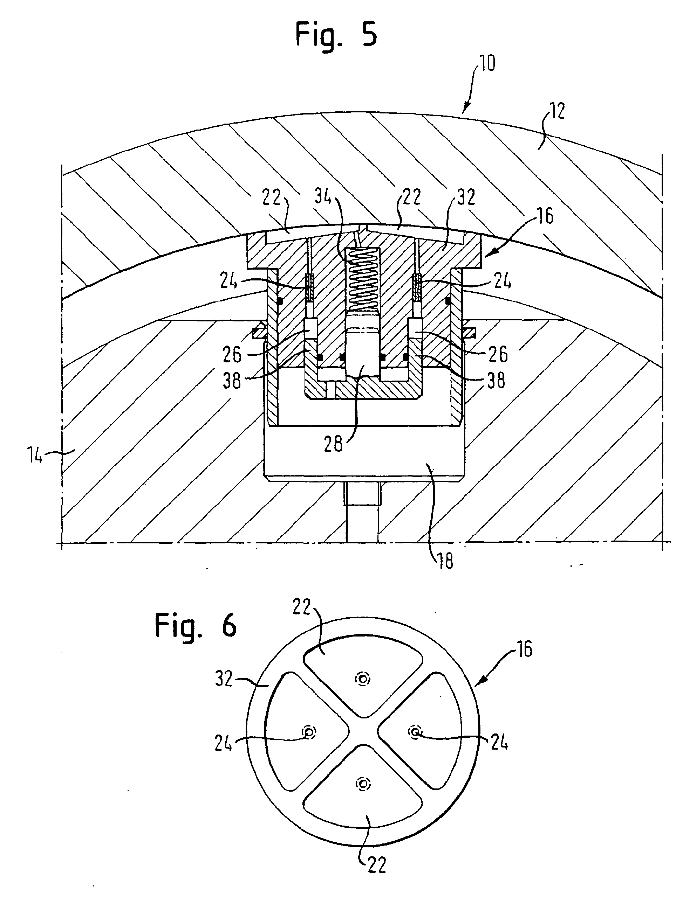

Die Figuren 5 und 6 zeigen in schematischer Darstellung eine weitere Ausführungsform einer erfindungsgemäßen Durchbiegungseinstellwalze 10 mit in Reihe geschalteten variablen und Festdrosseln 26 bzw. 24.

In diesem Fall sind die den variablen Drosseln 26 zugeordneten Ventilkörper 38 einstückig mit dem Steuerkolben 28 verbunden.

Im übrigen kann diese Ausführungsform zumindest im wesentlichen beispielsweise wieder den gleichen Aufbau wie die in den Figuren 3 und 4 gezeigte Ausführungsform besitzen. Einander entsprechenden Teilen sind gleiche Bezugszeichen zugeordnet.

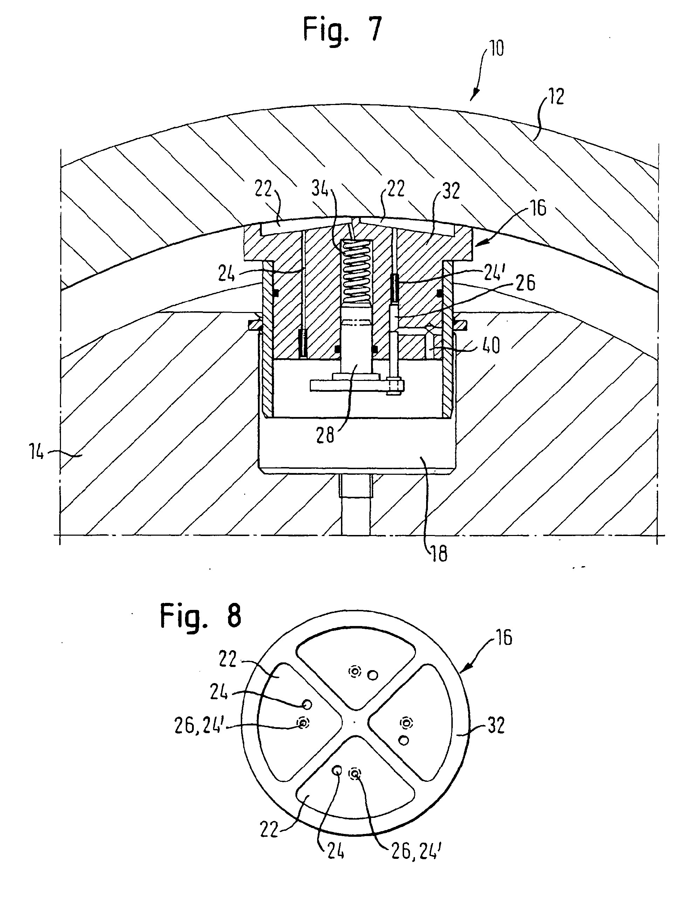

Bei der in den Figuren 7 und 8 dargestellten beispielhaften Ausführungsformen einer erfindungsgemäßen Durchbiegungseinstellwalze 10 ist eine jeweilige Hydrodstatiktasche 22 jeweils sowohl über eine Festdrossel 24 oder nichtvariable Kapillare als auch über eine parallele variable Drossel 26 mit Druckfluid versorgt. Wie anhand der Figur 7 zu erkennen ist, kann die variable Drossel 26 auch wieder mit einer Festdrossel 24' in Reihe geschaltet sein.

Die variable Drossel 26 kann insbesondere wieder so ausgeführt und/oder angesteuert sein, daß sie bei Kolbendrücken oberhalb eines vorgebbaren oberen Grenzwertes zumindest im wesentlichen ganz geschlossen und/oder bei Kolbendrücken unterhalb einem vorgebbaren unteren Grenzwert zumindest im wesentlichen ganz geöffnet ist. Wie anhand der Figur 7 zu erkennen ist, mündet die variable Drossel 26 über einen Kanal 40 im Druckraum 18.

Die variable Drossel 26 wird wieder über einen federbelasteten Steuerkolben 28 angesteuert.

Im übrigen kann auch diese Ausführungsform zumindest im wesentlichen beispielsweise wieder den gleichen Aufbau wie die in den Figuren 3 und 4 gezeigte Ausführungsform besitzen. Einander entsprechenden Teilen sind gleiche Bezugszeichen zugeordnet.

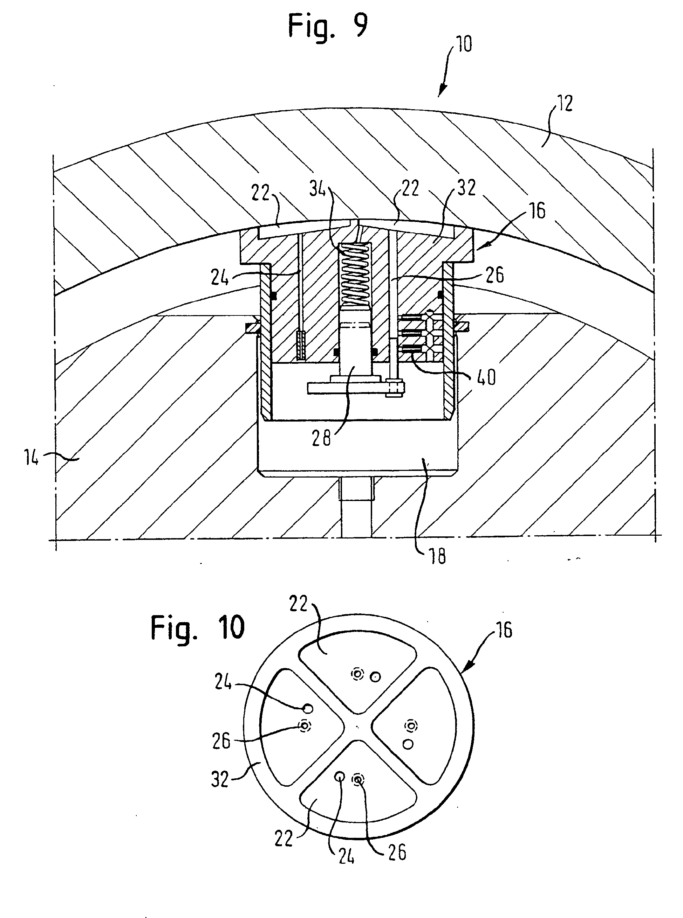

Die in den Figuren 9 und 10 gezeigte Ausführungsform unterscheidet sich von der der Figuren 7 und 8 zunächst dadurch, daß die variablen Drosseln 26 direkt in die jeweilige Hydrostatiktasche 22 münden. Überdies sind zwischen einer jeweiligen variablen Drossel 26 und dem Druckraum 28 jeweils eine oder mehrere Vordrosseln 40 vorgesehen.

### Bezugszeichenliste

- 10: Durchbiegungseinstellwalze
- 12: Walzenmantel
- 14: Joch
- 16: Stützelement
- 18: Druckraum
- 20: Kanal
- 22: Hydrostatiktasche
- 24: Drossel, Kapillare
- 24': Drossel, Kapillare
- 26: variable Drossel
- 28: Steuerkolben
- 30: Ausnehmung
- 32: Kolben
- 34: Feder, Federkraft
- 36: Platte
- 38: Ventilkörper
- 40: Vordrossel

## Patentansprüche

1. Durchbiegungseinstellwalze (10) mit einem umlaufenden Walzenmantel (12), einem den Walzenmantel (12) axial durchsetzenden drehfesten Joch (14), und mehreren in Richtung der Walzenachse hintereinander am Joch (14) angeordneten hydrostatischen Stützelementen (16), die jeweils durch eine druckfluidbetätigte Zylinder/Kolben-Einheit gebildet sind und auf die Innenseite des Walzenmantels (12) eine Stützkraft ausüben, wobei die Kolbenfläche eines jeweiligen hydrostatischen Stützelements (16) kleiner ist als die zum Walzenmantel (12) weisende Hydrostatiktaschenfläche und die Hydrostatiktaschen (22) der hydrostatischen Stützelemente (16) jeweils über wenigstens eine Drossel oder Kapillare (24) mit Druckfluid versorgt werden,
**dadurch gekennzeichnet,**
**daß** der Volumenstrom zumindest eines Teils des einer jeweiligen Hydrostatiktasche (22) zugeführten Druckfluids über wenigstens eine zwischen den Druckraum (18) des betreffenden Stützelements (16) und die zugeordnete Hydrostatiktasche (22) geschaltete variable Drossel (26) in Abhängigkeit vom Kolbendruck des jeweiligen Stützelements (16) variierbar ist, wobei die variable Drossel (26) mit zunehmend kleiner werdenden Kolbendrücken zunehmend geöffnet wird und umgekehrt.

2. Durchbiegungseinstellwalze nach Anspruch 1,
**dadurch gekennzeichnet,**
**daß** der Volumenstrom so variierbar ist, daß sich eine zumindest im wesentlichen konstante Mischtemperatur im Walzeninnern ergibt.

3. Durchbiegungseinstellwalze nach einem der vorhergehenden Ansprüche,
**dadurch gekennzeichnet,**
**daß** die variable Drossel (26) ein Ventil umfaßt.

4. Durchbiegungseinstellwalze nach einem der vorhergehenden Ansprüche,
**dadurch gekennzeichnet,**
**daß** die variable Drossel (26) so ausgeführt ist, daß der betreffende Volumenstrom mit zunehmend kleiner werdenden Kolbendrücken zunehmend größer wird und umgekehrt.

5. Durchbiegungseinstellwalze nach einem der vorhergehenden Ansprüche,
**dadurch gekennzeichnet,**
**daß** jedes Stützelement (16) jeweils mit wenigstens einer variablen Drossel versehen ist.

6. Durchbiegungseinstellwalze nach einem der vorhergehenden Ansprüche,
**dadurch gekennzeichnet,**
**daß** eine jeweilige Hydrostatiktasche (22) sowohl über wenigstens eine Festdrossel (24) oder nichtvariable Kapillare als auch über wenigstens eine variable Drossel (26) mit Druckfluid versorgt wird.

7. Durchbiegungseinstellwalze nach einem der vorhergehenden Ansprüche,
**dadurch gekennzeichnet,**
**daß** die variable Drossel (26) durch den Kolbendruck gesteuert ist.

8. Durchbiegungseinstellwalze nach einem der vorhergehenden Ansprüche,
**dadurch gekennzeichnet,**
**daß** die variable Drossel (26) so ausgeführt und/oder ansteuerbar ist, daß sie bei Kolbendrücken oberhalb eines vorgebbaren oberen Grenzwertes zumindest im wesentlichen ganz geschlossen und/oder bei Kolbendrücken unterhalb einem vorgebbaren unteren Grenzwert zumindest im wesentlichen ganz geöffnet ist.

9. Durchbiegungseinstellwalze nach einem der vorhergehenden Ansprüche,
**dadurch gekennzeichnet,**
**daß** die variable Drossel (26) durch einen vom Kolbendruck beaufschlagten Steuerkolben (28) gesteuert ist.

10. Durchbiegungseinstellwalze nach Anspruch 9,
**dadurch gekennzeichnet,**
**daß** der vorzugsweise im jeweiligen Stützelement (16) geführte Steuerkolben (28) federbelastet und durch den Kolbendruck im Druckraum (18) des Stützelements (16) entgegen der Federkraft (34) beaufschlagbar ist.

11. Durchbiegungseinstellwalze nach einem der vorhergehenden Ansprüche,
**dadurch gekennzeichnet,**
**daß** mit der variablen Drossel (26) eine Festdrossel (24) in Reihe geschaltet ist.

12. Durchbiegungseinstellwalze nach einem der vorhergehenden Ansprüche,
**dadurch gekennzeichnet,**
**daß** zwischen der variablen Drossel (26) und dem Druckraum (18) des jeweiligen Stützelements (16) eine Vordrossel (40) vorgesehen ist.

## Claims

1. A deflection controlled roll (10) comprising a rotating roll jacket (12), a rotationally fixed yoke (14) passing axially through the roll jacket (12) and a plurality of hydrostatic support elements (16) which are arranged sequentially on the yoke (14) in the direction of the roll axis and which are each formed by a piston in cylinder unit actuated by pressure fluid and exert a supporting force on the inner side of the roll jacket (12), with the piston surface of a respective hydrostatic support element being smaller than the hydrostatic pocket surface facing twoward the roll jacket (12) and with the hydrostatic pockets (22) of the hydrostatic support elements (16) each being supplied with pressure fluid via at least one restrictor or capillary (24),
**characterized in that**
the volume flow of at least some of the pressure fluid supplied to a respective hydrostatic pocket (24) can be varied in dependence on the piston pressure of the respective support element (16) via at least one variable resistor (/26) disposed between the pressure space (18) of the respective support element (16) and the associated hydrostatic pocket (22), with the variable restrictor (26) being increasingly opened as piston pressures become increasingly smaller and vice versa.

2. A deflection controlled roll in accordance with claim 1, **characterized in that** the volume flow can be varied such that an at least substantially constant mixing temperature results at the interior of the roll.

3. A deflection controlled roll in accordance with any one of the preceding claims, **characterized in that** the variable restrictor (26) includes a valve.

4. A deflection controlled roll in accordance with any one of the preceding claims, **characterized in that** the variable restrictor (26) is designed such that the respective volume flow becomes increasingly larger as the piston pressures become increasingly smaller and vice versa.

5. A deflection controlled roll in accordance with any one of the preceding claims, **characterized in that** each support element (16) is provided with at least one variable restrictor.

6. A deflection controlled roll in accordance with any one of the preceding claims, **characterized in that** a respective hydrostatic pocket (22) is supplied with pressure fluid both via at least one fixed restrictor (24), or non-variable capillary, and via at least one variable restrictor (26).

7. A deflection controlled roll in accordance with any one of the preceding claims, **characterized in that** the variable restrictor (26) is controlled by the piston pressure.

8. A deflection controlled roll in accordance with any one of the preceding claims, **characterized in that** the variable restrictor (26) is designed and/or is controllable such that it is at least substantially fully closed at piston pressures above a pre-settable upper limiting value and/or is at least substantially fully open at piston pressures below a pre-settable lower limiting value.

9. A deflection controlled roll in accordance with any one of the preceding claims, **characterized in that** the variable restrictor (26) is controlled by a control piston (28) charged by the piston pressure.

10. A deflection controlled roll in accordance with claim 9, **characterized in that** the control piston (28) preferably guided in the respective support element (16) is spring loaded and can be charged against the spring force (34) by the piston pressure in the pressure space (18) of the support element (16).

11. A deflection controlled roll in accordance with any one of the preceding claims, **characterized in that** a fixed restrictor (24) is disposed in series with the variable restrictor (26).

12. A deflection controlled roll in accordance with any one of the preceding claims, **characterized in that** a pre-restrictor (40) is provided between the variable restrictor (26) and the pressure space (18) of the respective support element (16).

## Revendications

1. Cylindre de réglage du fléchissement (10), comportant un bandage de cylindre (12) périphérique, un étrier (14) solidaire en rotation et traversant axialement le bandage de cylindre (12), et plusieurs éléments de soutien hydrostatiques (16) agencés sur l'étrier (14) les uns derrière les autres en direction de l'axe de cylindre, qui sont formés chacun par une unité à piston-et-cylindre actionné par un fluide sous pression et qui exercent une force de soutien sur le côté intérieur du bandage de cylindre (12), la surface de piston d'un élément de soutien hydrostatique respectif (16) étant inférieure à la surface de poche hydrostatique dirigée vers le bandage de cylindre (12), et les poches hydrostatiques (22) des éléments de soutien hydrostatiques (16) étant alimentées en fluide sous pression chacune via au moins un étranglement ou un capillaire (24),
**caractérisé en ce que**
le flux volumique d'une partie au moins du fluide sous pression acheminée vers la poche hydrostatique respective (22) est variable via au moins un étranglement variable (26) interposé entre la chambre de pression (18) de l'élément de soutien concerné (16) et la poche hydrostatique associée (22), en fonction de la pression de piston de l'élément de soutien respectif (16), l'étranglement variable (26) étant ouvert de plus en plus au fur et à mesure de la réduction des pressions de piston, et inversement.

2. Cylindre de réglage du fléchissement selon la revendication 1,
**caractérisé en ce que**
le flux volumique est variable de telle sorte qu'il résulte une température de mélange au moins sensiblement constante dans l'intérieur du cylindre.

3. Cylindre de réglage du fléchissement selon l'une des revendications précédentes,
**caractérisé en ce que**
l'étranglement variable (26) comprend une valve.

4. Cylindre de réglage du fléchissement selon l'une des revendications précédentes,
**caractérisé en ce que**
l'étranglement variable (26) est réalisé de telle sorte que le flux volumique concerné devient de plus en plus grand au fur et à mesure de la réduction des pressions de piston, et inversement.

5. Cylindre de réglage du fléchissement selon l'une des revendications précédentes,
**caractérisé en ce que**
chaque élément de soutien (16) est pourvu d'au moins un étranglement variable respectif.

6. Cylindre de réglage du fléchissement selon l'une des revendications précédentes,
**caractérisé en ce que**
une poche hydrostatique respective (22) est alimentée en fluide sous pression aussi bien via au moins un étranglement fixe (24) ou via un capillaire non variable que via au moins un étranglement variable (26).

7. Cylindre de réglage du fléchissement selon l'une des revendications précédentes,
**caractérisé en ce que**
l'étranglement variable (26) est commandé par la pression de piston.

8. Cylindre de réglage du fléchissement selon l'une des revendications précédentes,
**caractérisé en ce que**
l'étranglement variable (26) est réalisé et/ou pilotable de manière à être au moins sensiblement complètement fermé à des pressions de piston supérieures à une valeur limite supérieure prédéterminée, et/ou de manière à être au moins sensiblement complètement ouvert à des pressions de piston inférieures à une valeur limite inférieure prédéterminée.

9. Cylindre de réglage du fléchissement selon l'une des revendications précédentes,
**caractérisé en ce que**
l'étranglement variable (26) est commandé par un piston de commande (28) sollicité par la pression de piston.

10. Cylindre de réglage du fléchissement selon la revendication 9,
**caractérisé en ce que**
le piston de commande (28) guidé de préférence dans l'élément de soutien respectif (16) est chargé par un ressort et susceptible d'être sollicité par la pression de piston dans la chambre de pression (18) de l'élément de soutien (16), à l'encontre de la force du ressort (34).

11. Cylindre de réglage du fléchissement selon l'une des revendications précédentes,
**caractérisé en ce que**
un étranglement fixe (24) est branché en série avec l'étranglement variable (26).

12. Cylindre de réglage du fléchissement selon l'une des revendications précédentes,
**caractérisé en ce que**
il est prévu un étranglement préliminaire (40) entre l'étranglement variable (26) et la chambre de pression (18) de l'élément de soutien respectif (16).
